# EUROPEAN PATENT SPECIFICATION

(11) **EP 1 025 562 B1**
(45) Date of publication and mention of the grant of the patent: **27.02.2002**
(21) Application number: 98941973.4
(22) Date of filing: 25.08.1998
(51) Int. Cl.: G11B 20/22, G11B 27/36, G04F 10/10

(54) **METHOD AND DEVICE FOR MEASURING AND REGISTERING STATISTICAL TIME VARIATIONS FOR AN OPTICAL DATA CARRIER**
VERFAHREN UND VORRICHTUNG ZUR MESSUNG UND REGISTRIERUNG VON STATISTISCHEN ZEITÄNDERUNGEN FÜR EINEN OPTISCHEN DATENTRÄGER
PROCEDE ET DISPOSITIF SERVANT A MESURER ET A ENREGISTRER LES VARIATIONS STATISTIQUES DE TEMPS POUR UN SUPPORT OPTIQUE DE DONNEES

(30) Priority: 01.09.1997 SE 9703134
(43) Date of publication of application: 09.08.2000
(73) Proprietor: AudioDev Aktiebolag, 212 39 Malmö (SE)
(72) Inventor: WILHELMSON, Ulf, S-215 26 Malmö (SE)
(74) Representative: Andersson, Björn E.
(86) International application number: SE9801514
(87) International publication number: WO9912166

(56) References cited:
- US-A- 3 970 828
- US-A- 4 301 360
- US-A- 4 583 211
- US-A- 4 637 733
- US-A- 4 908 784

## Description

### Technical Field

The present invention relates to a method and a device for measuring and registering statistical time variations for an optical data carrier.

### Description of the Prior Art

Optical data carriers are used for storing very large amounts of digital information, which represent for instance music, images or digital data for computers, such as program files and data files. The most common type of such optical data carriers is the compact disc, which is available in several different kinds, among which CD-ROM, CD-Audio, CD-I, CD-ROM XA, CD-R and CD-RW are the most common. The standard for compact discs was established during the 70s and has been in use ever since. Recently, a new generation of compact discs has been introduced on the market; DVD-discs.

A common feature of the compact discs above is that they store very large amounts of information on a small surface. The digital information is read at high precision by means of a laser beam, and even if the information is stored on the compact discs according to error-correcting encoding methods, there is a large demand among manufacturers and distributors of compact discs to be able to quality check the production of the compact discs in order to ascertain a minimal number of errors and deficiencies among the compact discs, mainly in their information-carrying layer.

When checking the quality of compact discs, a variety of parameters are measured and registered, both physical parameters (such as skewness, eccentricity, track-to-track-distance, cross talk, etc) and logical errors (various rates of bit errors, block errors and burst errors). Other important parameters are the degree of birefringence in the transparent plastic layer of the compact disc and so-called jitter, i.e. statistical time variations in the signal obtained when reading or playing the compact disc. For CDs it is often desired to find out about variations in the distance between the beginning of a storage element (pit or plane area) and the end of that storage element, and for DVDs variations in the distance between the beginning of a storage element and a predetermined edge of a clock or reference signal are of interest.

These statistical time deviations or jitter are caused by the fact that two storage elements of the same type rarely have exactly the same physical shape or longitudinal extension in practice.

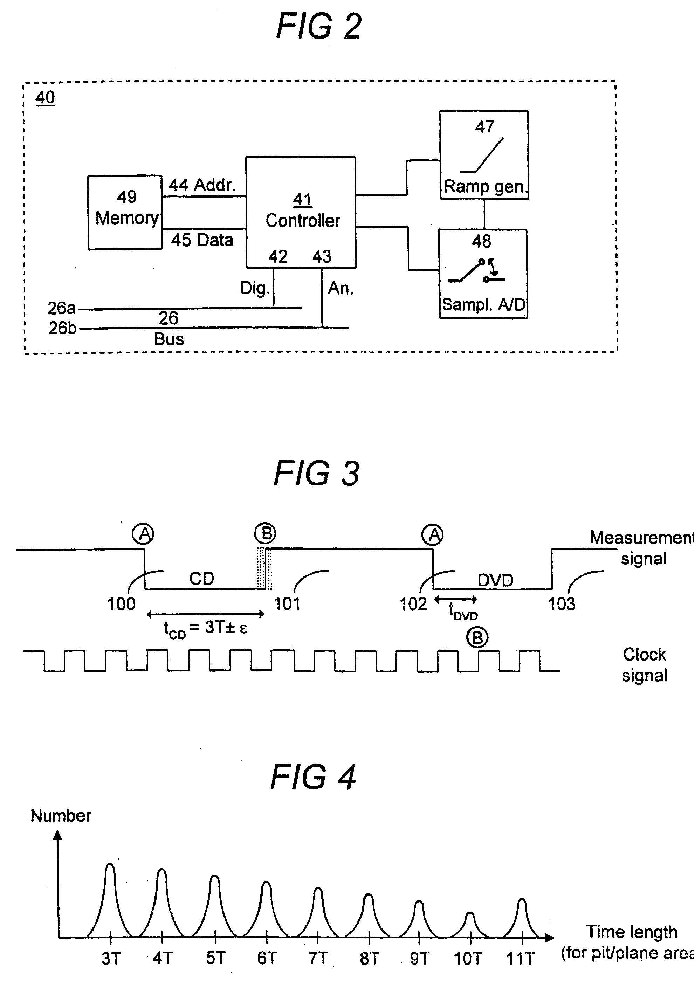

The phenomenon is illustrated in FIG 3, where the time t_{CD} between the beginning of a storage pit 100 and the end of that storage pit would ideally be for instance 3T, but where a statistical deviation ε in fact causes the time interval between the beginning (A) and the end (B) of the pit 100 to be t_{CD} = 3T ± ε. T represents the inverted value of the bit frequency, which is equal to 4.3218 x 10⁶ Hz for CDs. For DVDs, on the other hand, the interesting time interval is the time between the beginning (A) of a pit 102 and a predetermined edge (B) of a regenerated clock signal.

In practice, since the time t_{CD} and t_{DVD}, respectively, is not always exactly equal to the ideal value (for instance nT for CDs, where n = 3,4,...,11), an uncertainty is caused for subsequent storage elements (the plane areas 101 and 103, respectively, in FIG 3), as regards the exact time extension thereof, since an uncertainty in for instance the end point (B) for the pit 100 will automatically bring an uncertainty as regards the exact starting time for the subsequent storage element 101. For natural reasons manufacturers of compact discs want to minimize such so-called intersymbol interference between subsequent storage elements or symbols.

In other words it is desired to obtain a representation of the statistical distribution of measured time lengths for all types of storage elements, as is schematically illustrated in FIG 4. Apparently the time lengths often have a gaussian distribution around the respective ideal time length (3T, 4T, etc). Theoretically, a method of producing such statistical information could involve reading the total information contents of the optical data carrier, i.e. all pits and plane areas stored on the data carrier, and then statistically processing the measured values. Since the information contents of a normal compact disc are very large, such a method would require virtually enormous storage sizes in order to store all mesured values prior to the statistical evaluation, and hence such a method does not appear applicable in practice. Hence, previously known methods have involved using universal instruments, such as time interval analyzers or modulation domain analyzers. Such high-performance instruments are, however, very expensive.

### Summary of the Invention

It is an object of the present invention to provide a method and a device for measuring and registering statistical time variations, also known as jitter, for an optical data carrier, wherein the measurements as well as the registration may be carried out in real-time and with the use of simple components and memories with relatively few memory cells.

This object is achieved by detecting a first event in the measurement signal, wherein a ramp signal is generated in response, by detecting a second event in the measurement signal or in a reference/clock signal, wherein an instantaneous value of the ramp signal is read, by generating a memory address as a function of the read instantaneous value, by reading from an electronic memory at the memory address, by arithmetically modifying the value read from the memory, and by writing the arithmetically modified value back to the same memory address in the electronic memory.

Other objects, advantages and features of the present invention will appear from the following detailed disclosure, from the appended patent claims as well as from the drawings.

### Brief Description of the Drawings

The present invention will now be described in more detail with reference to the accompanying drawings, in which
FIG 1 is a schematic block diagram of a system for testing and checking the quality of optical data carriers,
FIG 2 is a schematic block diagram of a device according to a preferred embodiment of the present invention,
FIGs 3 and 4 schematically illustrate statistical time variations in a measurement signal from an optical data carrier, the time variations being of a type, which the present invention intends to measure and register,
FIG 5 is a graph, which schematically illustrates a ramp signal generated according to the invention,
FIG 6 is an enlarged view of the ramp signal in FIG 5 and
FIG 7 schematically illustrates triangle waves or ramp signals of alternating direction, the signals being generated according to an alternative embodiment of the invention.

### Detailed Disclosure of the Invention

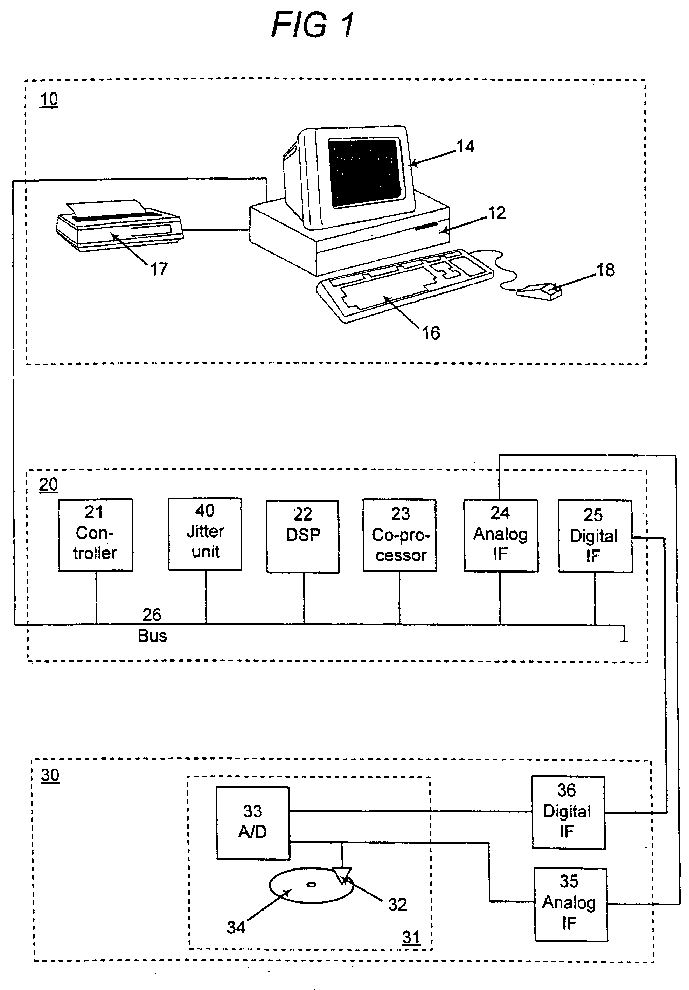

FIG 1 illustrates a block diagram of an arrangement for testing and checking the quality of optical data carriers, such as compact discs of any type described above. The system comprises three main parts: a part 10 for user communication, an analysis part 20 and a measurement part 30, the first of which comprising a computer 12, a monitor 14, a keyboard 16, a mouse 18 and a printer 17 for acting as user interface to a human operator (receiving user commands through the keyboard 16 and the mouse 18, presenting obtained test data on the monitor 14 and the printer 17, etc.)

The analysis part 20 comprises a main controller 21 for controlling and monitoring the operation of other components of the analysis part. The analysis part furthermore comprises a digital signal processor (DSP) 22, by means of which many of the desired parameters may be measured, analysed and represented. One or several coprocessors 23 assist(s) the main controller 21 and the signal processor 22. The components 21, 22 and 23 are all connected to a bus 26, which comprises digital (preferably optical fiber) as well as analog (for instance twisted pair cable) channels. An analog interface 24 and a digital interface 25 are connected to the bus 26 and are arranged to be connected to corresponding interfaces in the measurement part 30, as will be described in more detail below. Finally, a jitter measurement unit 40 is connected to the bus 26. The jitter measurement unit 40 is arranged to execute the measurements and registration of the statistical time variations according to the present invention and will be described in more detail below.

The measurement part 30 comprises an analog interface 35 and a digital interface 36 for communicating with the corresponding interfaces 24 and 25 in the analysis part 20. The optical data carrier 34 to be tested (usually a compact disc) is placed in a player 31 of a type known per se. A reading device 32 is arranged to irradiate the data carrier 34 with a laser beam and to receive light continuously reflected from the data carrier. A unit 33 for analog-to-digital conversion is connected to the reading device 32 and to the digital interface 36. The reading device 32 is furthermore directly connected to the analog interface 35.

With the exception of the jitter measurement unit 40 the user part 10 as well as the analysis part 20 and the measurement part 30 have a design, which is essentially well-known within the technical field, and no further description is regarded necessary herein. The jitter measurement unit 40, on the other hand, comprises the functions and features, which are central for the present invention, and consequently these functions and features will be described in detail below.

A preferred embodiment of the jitter measurement unit 40 is illustrated as a block diagram in FIG 2. A controller 41, which may be comprised by any commercially available digital processor, is provided with terminals 42 and 43, which are operatively connected to the digital channel 26a and the analog channel 26b, respectively, in the bus 26. Additionally, the controller 41 is operatively connected to a memory 49 via an address bus 44 and a data bus 45.

A ramp generator 47 is operatively connected to the controller 41 and may be controlled from the latter. The ramp generator is furthermore connected to a sampling and analog/digital converting unit 48. The unit 48 is also connected to the controller 41.

The functions of the jitter measurement unit 40 will be described in more detail in the following, and in the context thereof the data carrier 34 is supposed to be any commercially available compact disc. The electric read signal, which is continuously produced by the reading device 32 during the playing of the compact disc, is supplied to the bus 26 (more specifically over the analog channel 26b) through the analog interface 35. The signal is received at the analog interface 24 in the analysis part 20, which forwards the signal onto the bus 26. The controller 41 receives the measurement signal through the terminal 43. As shown in FIG 3 the measurement signal comprises a continuous stream of square waves of different length, corresponding to the pits and the plane areas in the storage layer of the compact disc. The controller 41 is arranged to detect the beginning of the different storage elements. In FIG 3 this is illustrated in the form of a pit 100 of ideal length 3T, where T, as previously mentioned, is equal to 1/(4.3218 x 10⁶) seconds, i.e. the inverted value of the bit frequency for CDs.

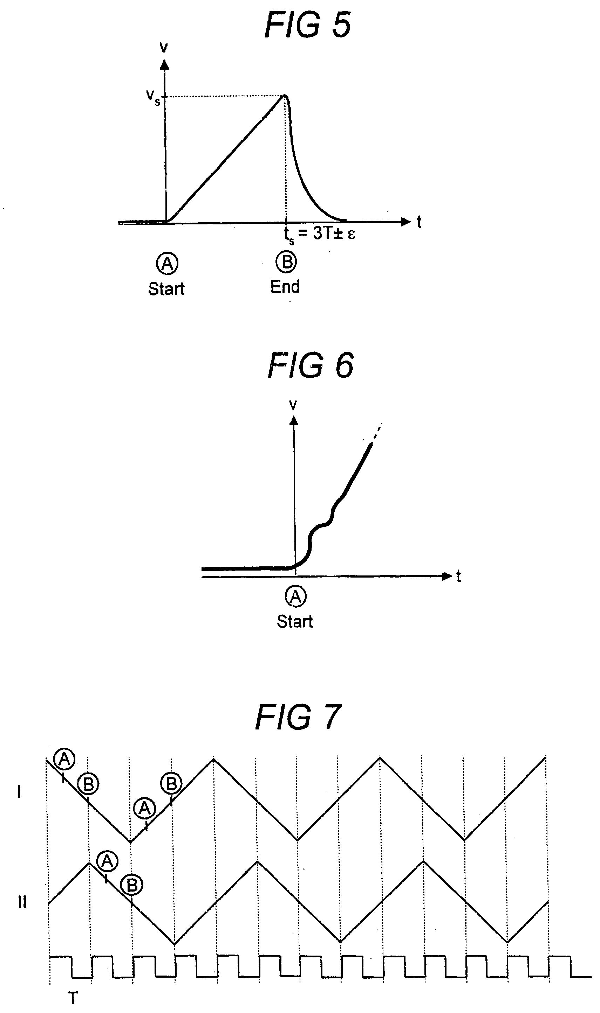

When the controller 41 detects the beginning of the pit 100 at (A), a start command is given to the ramp generator 47. At the reception of this start command from the controller 41, the ramp generator 47 will generate a ramp-shaped voltage, which increases linearly from a zero or origin level, as is illustrated in FIG 5.

Furthermore, the controller 41 is arranged to detect the end of the storage element in question, i.e. the storage pit 100 in FIG 3, as is indicated by (B) in this figure. At that time the controller 41 gives a read command to the sampling and analog/digital converting unit 48. The unit 48 samples an instantaneous value vₛ of the ramp voltage generated by the ramp generator 47. The sampled value is converted to digital form and is supplied to the controller 41. Simultaneously, the controller 41 generates an end command, which is given to the ramp generator 47, wherein the generator stops generating the ramp voltage and returns to the zero level via a discharge procedure.

The sampled value Vₛ is directly proportional to the actual time length t_{CD} between the events (A) and (B), thanks to the linearity of the ramp signal. The time t_{CD}, which in the ideal case would be exactly 3T, is equal to 3T ± ε in reality, where ε is a statistical deviation. The digitalized value of vₛ is then used by the controller 41 for generating a memory address, with which the memory 49 is addressed via the address bus 44.

The memory 49, which may be any conventional random access memory (RAM), comprises a set of memory cells, each of which stores a number of information bits, normally a multiple of 8. Before the jitter measurement is initiated, the contents of all memory cells are set to zero in memory 49. The memory content at the address, which corresponds to the sampled value vₛ, is then read from memory 49 via the data bus 45. In response the controller 41 converts the read memory content to a numerical value, for which an arithmetic operation is performed. Preferably the arithmetic operation is a simple increment (i.e. the numerical value is incremented by 1), but also other arithmetic operations may be possible. The purpose of the arithmetic operation is to indicate and keep record of the number of times, that the time length t_{CD} = 3T ± ε = t_{S} has appeared, so that statistical information may be produced for every type of storage element, corresponding to the diagram of FIG 4. The arithmetically modified or incremented value is therefore written back at the same memory address in memory 49 via the data bus 45.

When the measurement cycle is completed, the controller is prepared to process the following storage element 101 (a plane area 101 in FIG 3), wherein the procedure described above is repeated. The memory 49 is preferably divided into two segments, the first of which is used for storage elements of a pit type, while the second segment is used for plane areas. Other segmentations may, however, also be appropriate, and the number of bits in the respective memory cell as well as the total number of memory cells in the memory may naturally be adjusted depending on the actual circumstances. The theoretical number of different storage elements is quite limited, or more specifically 2 x 9 = 18 for CDs, and even if measurement values in practice (due to the statistical time deviations described above) are distributed around the respective theoretical value, it is easily realized that the requirements on the size of the memory 49 are very low. For instance, the memory 49 may contain 2048 memory cells, each of which comprises 16 bits (i.e. 2 bytes) of data.

Additionally, the controller 41 is arranged to provide the statistical information stored in the memory 49 about the distribution of the actual time lengths for the respective type of storage element to the user part 10 over the bus 26 at appropriate instants. The statistical information may then be presented in a conventional way by the computer 12 on the monitor 14, for instance as a diagram like the one shown in FIG 4.

An alternative embodiment, which is particularly suitable for data carriers with high transfer rates, such as DVD, will now be described with reference to FIGs 6 and 7. FIG 6 illustrates an enlarged portion of the ramp voltage generated by the ramp generator 47 according to the above. It appears from the figure that non-linear ripples appear at the beginning of the ramp (close to the start event (A)). Subsequently, the linearity of the ramp becomes better and better. For less fast data carriers, such as conventional CDs with a nominal bit frequency of 4.3218 x 10⁶ Hz, the non-linear phenomena described above constitute no particular problem. For faster storage media, such as DVDs, where the bit frequency is six times higher, or about 25 x 10⁶ Hz, the problems are more apparent. Therefore, it is suggested to modify the ramp generator 47, so that it will generate two triangle signals I and II, respectively, which have a phase difference corresponding to a time T with respect to each other, as shown in FIG 7.

According to this embodiment the controller 41 is arranged to generate a first read command at the start event (A) and a second read command at the end event (B) (cf. FIG 3) for the unit 48, which will report the two sampled values to the controller 41 in similarity to the above. According to the illustration in FIG 7 the unit 48 is arranged to read the instantaneous values from either the triangle wave I or the triangle wave II, depending on where in the cycle thereof that the events (A) or (B) occur. The problematic non-linearities, which are generated when a ramp "starts" from its zero level, are actually avoided by using ramp signals, which never return to a zero level but instead change direction on a regular basis - i.e. the triangle waves I and II. The triangle waves may preferably be generated by integrating the regenerated clock signal. The instantaneous value is read from either the wave I or the wave II, depending on which of the waves that will not change direction between the start and the end events and therefore will exhibit a good linearity.

The controller 41 calculates the difference between the two values and thereby obtains the time interval between the events (A) and (B). Then an address is generated as a function of the calculated time difference and the ramp type used, i.e. I or II. The memory 49 is accessed, wherein the memory content is retrieved at the above address. The controller 41 then modifies the read value arithmetically and writes it back at the same address.

In other aspects the embodiment according to FIGs 6 and 7 operates essentially in the same way as the preferred embodiment described above (FIG 2).

The present invention has been described above by way of a few exemplifying but not limiting embodiments and figures. It should be apparant to a man skilled in the technical field, that the invention may be modified and exercised in many different ways within the scope of the invention, as defined by the appended independent patent claims.

## Claims

1. A method of measuring and registering statistical time variations in a measurement signal, which is obtained when reading or playing an optical data carrier (34), **characterized by** the steps of:
a) detecting a first event (A) in the measurement signal and generating a ramp signal in response,
b) detecting a second event (B) in the measurement signal, or in a reference or clock signal associated therewith, and reading an instantaneous value of the ramp signal in response,
c) generating a memory address as a function of the read instantaneous value,
d) reading a numerical memory content in an electronic memory (49) at the memory address obtained in step c),
e) arithmetically modifying the numerical value read from memory and
f) writing the arithmetically modified value to the electronic memory at the memory address obtained in step c).

2. A method according to claim 1, **characterized in that** it is applied for producing jitter statistics when reading or playing an optical data carrier (34).

3. A method according to claim 1 or 2, **characterized in that** the optical data carrier (34) is a CD.

4. A method according to claim 1 or 2, **characterized in that** the optical data carrier (34) is a DVD.

5. A method according to any of claims 2-4, **characterized in that** the first event (A) corresponds to the beginning of a storage element (100) in the information layer of the data carrier (34), and **in that** the second event (B) corresponds to the end of the same storage element (100).

6. A method according to any of claims 2-4, **characterized in that** said events correspond to the beginning (A) of a storage element (102) in the information layer of the data carrier (34) and a predetermined edge (B) of a reference or clock signal associated with the measurement signal, respectively.

7. A method according to any preceding claim, **characterized by** the steps of:
i) when having detected the first event (A), reading a first instantaneous value of either a first or a second triangle signal (I, II), the first and second signals having a predetermined phase difference with respect to each other,
ii) when having detected the second event (B), reading a second instantaneous value of the same triangle signal as in step i), and
iii) generating the memory address to the electronic memory (49) as a function of the instantaneous values read in steps i) and ii),
wherein the readings of steps i) and ii) are made for either of the triangle signals (I, II), which exhibits linearity between the first and the second events.

8. A device (40) for measuring and registering statistical time variations in a measurement signal obtained when reading or playing an optical data carrier (34), **characterized by**:
a controller (41) capable of receiving the measurement signal;
storage means (49) comprising a plurality of addressable memory cells;
means (47) for generating a ramp signal when receiving a start command from the controller (41); and
means (48) for reading and digitalizing an instantaneous value of the ramp signal when receiving a read command from the controller (41);
wherein the controller (41) is arranged to:
a) detect a start event (A) in the measurement signal and in response thereof give a start command to said means (47) for generating a ramp signal;
b) detect an end event (B) in the measurement signal or in a reference or clock signal associated therewith, in response thereof give a read command to said means (48) for reading and digitalizing and receive a digital value of the measurement signal therefrom at the time when the end event occurs;
c) generate a memory address as a function of the received value of the measurement signal and read the numerical content at this memory address in the storage means (49); and
d) perform an arithmetic operation with the memory content read in c) as one operand and write the result of the arithmetic operation at the memory address according to c) .

9. A device according to claim 8, **characterized in that** the start event (A) corresponds to a predetermined edge (A) of a storage element (100) in the storage layer of the optical data carrier (34).

10. A device according to claims 8 or 9, **characterized in that** the end event (B) corresponds to a predetermined edge (B) of a storage element (100) in the storage layer of the optical data carrier (34).

11. A device according to any of claims 8-10, **characterized in that** either the start event (A) or the end event (B) corresponds to a predetermined edge of a reference or clock signal associated with the measurement signal.

12. A device according to any of claims 8-11, **characterized in that** the arithmetic operation in d) involves incrementing the read memory content.

13. A device according to any of claims 8-12, **characterized in that**:
the means (47) is arranged to generate a first and a second triangle signal (I, II) with a certain mutual phase difference,
the means (48) is arranged to read a first and a second instantaneous value of either one of the triangle signals (I, II), which exhibits linearity between the start and the end events, when receiving a first and a second read command from the controller (41), and
the controller (41) is arranged to give the first read command to the means (48) when detecting the first event (A), give the second read command to the means (48) when detecting the second event (B) and generate the memory address of the memory (49) as a function of a difference between the first and the second instantaneous values.

## Patentansprüche

1. Verfahren zur Messung und Registrierung von statistischen zeitlichen Schwankungen in einem Meßsignal, das beim Lesen oder Abspielen eines optischen Datenträgers (34) erhalten wird, **gekennzeichnet durch** die Schritte:
a) Detektieren eines ersten Ereignisses (A) in dem Meßsignal und Erzeugen eines Rampensignals als Antwort,
b) Detektieren eines zweiten Ereignisses (B) in dem Meßsignal oder in einem damit verbundenen Referenz- oder Taktsignal und Lesen eines momentanen Werts des Rampensignals als Antwort,
c) Erzeugen einer Speicheradresse als eine Funktion des gelesenen momentanen Werts,
d) Lesen eines numerischen Speicherinhalts in einem elektronischen Speicher (49) an der in dem Schritt c) erhaltenen Speicheradresse,
e) arithmetisches Modifizieren des aus dem Speicher gelesenen numerischen Werts und
f) Schreiben des arithmetisch modifizierten Werts auf den elektronischen Speicher an der in den Schritt c) erhaltenen Speicheradresse.

2. Verfahren nach Anspruch 1, **dadurch gekennzeichnet, daß** es zum Erzeugen von Jitter-Statistiken beim Lesen oder Abspielen eines optischen Datenträgers (34) angewendet wird.

3. Verfahren nach Anspruch 1 oder 2, **dadurch gekennzeichnet, daß** der optische Datenträger (34) eine CD ist.

4. Verfahren nach Anspruch 1 oder 2, **dadurch gekennzeichnet, daß** der optische Datenträger (34) eine DVD ist.

5. Verfahren nach irgendeinem der Ansprüche 2 - 4, **dadurch gekennzeichnet, daß** das erste Ereignis (A) dem Beginn eines Speicherelements (100) in der Informationsschicht des Datenträgers (34) entspricht und daß das zweite Ereignis (B) dem Ende desselben Speicherelements (100) entspricht.

6. Verfahren nach irgendeinem der Ansprüche 2 - 4, **dadurch gekennzeichnet, daß** besagte Ereignisse jeweils dem Beginn (A) eines Speicherelements (102) in der Informationsschicht des Datenträgers (34) und einer vorab festgelegten Flanke (B) eines mit dem Meßsignal verbundenen Referenz- oder Taktsignals entsprechen.

7. Verfahren nach irgendeinem vorangehenden Anspruch, **gekennzeichnet durch** die Schritte:
i) wenn das erste Ereignis (A) delektiert worden ist, Lesen eines ersten momentanen Wertes von entweder einem ersten oder einem zweiten Dreieckssignal (I, II), wobei die ersten und zweiten Signale eine vorab festgelegte Phasendifferenz in Bezug zueinander aufweisen,
ii) wenn das zweite Ereignis (B) detektiert worden ist, Lesen eines zweiten momentanen Werts desselben Dreieckssignals wie in Schritt i), und
iii) Erzeugen der Speicheradresse für den elektronischen Speicher (49) als eine Funktion der in den Schritten i) und ii) gelesenen momentanen Werte,
wobei das Lesen der Schritte i) und ii) für eines der Dreieckssignale (I, II) durchgeführt wird, das eine Linearität zwischen den ersten und zweiten Ereignissen zeigt.

8. Vorrichtung (40) zur Messung und Registierung von statistischen zeitlichen Schwankungen in einem Meßsignal, das beim Lesen oder Abspielen eines optischen Datenträgers (34) erhalten wird, **gekennzeichnet durch**:
einen Controller (41), der zum Empfangen des Meßsignals fähig ist;
ein Speichermittel (49) mit mehreren adressierbaren Speicherzellen;
ein Mittel (47) zum Erzeugen eines Rampensignals beim Empfang eines Startbefehls vom Controller (41); und
ein Mittel (48) zum Lesen und Digitalisieren eines momentanen Werts des Rampensignals bei Empfang eines Lesebefehls vom Controller (41);
wobei der Controller (41) gestaltet ist, um:
a) ein Startereignis (A) in dem Meßsignal zu detektieren und als Antwort darauf einen Startbefehl an besagtes Mittel (47) zum Erzeugen eines Rampensignals zu geben;
b) ein Endereignis (B) in dem Meßsignal oder in einem damit verbundenen Referenz- oder Taktsignal zu delektieren, als Antwort darauf einen Lesebefehl an besagtes Mittel (48) zum Lesen und Digitalisieren zu geben und einen digitalen Wert des Meßsignals von dort zum Zeitpunkt zu empfangen, wenn das Endereignis eintritt;
c) eine Speicheradresse als eine Funktion des empfangenen Werts des Meßsignals zu erzeugen und den numerischen Inhalt an dieser Speicheradresse in dem Speicher (49) zu lesen; und
d) eine arithmetische Operation mit dem in c) gelesenen Speicherinhalt als Operand durchzuführen und das Ergebnis der arrethmetische Operation an der Speicheradresse gemäß c) zu schreiben.

9. Vorrichtung nach Anspruch 8, **dadurch gekennzeichnet, daß** das Startereignis (A) einer vorab festgelegten Flanke (A) eines Speicherelements (100) in der Speicherschicht des optischen Datenträgers (34) entspricht.

10. Vorrichtung nach Anspruch 8 oder 9, **dadurch gekennzeichnet, daß** das Endereignis (B) einer vorab festgelegten Flanke (B) eines Speicherelements (100) in der Speicherschicht des optischen Datenträgers (34) entspricht.

11. Vorrichtung nach irgendeinem der Ansprüche 8 - 10, **dadurch gekennzeichnet, daß** entweder das Startereignis (A) oder das Endereignis (B) einer vorab festgelegten Flanke eines mit dem Meßsignal verbundenen Referenz- oder Taksignals entspricht.

12. Vorrichtung nach irgendeinem der Ansprüche 8 - 11, **dadurch gekennzeichnet, daß** die arithmetische Operation in d) ein Inkrementieren des gelesenen Speicherinhalts mit sich bringt.

13. Vorrichtung nach irgendeinem der Ansprüche 8 - 12, **dadurch gekennzeichnet, daß**:
das Mittel (47) zum Erzeugen eines ersten und eines zweiten Dreieckssignals (I, II) mit einer gewissen wechselseitigen Phasendifferenz gestaltet ist,
das Mittel (48) zum Lesen eines ersten und eines zweiten momentanen Werts von einem der Dreieckssignale (I, II) gestaltet ist, das eine Linearität zwischen den Start- und Endereignissen bei Empfang eines ersten und eines zweiten Lesebefehls vom Controller (41) zeigt, und
der Controller (41) zum Geben des ersten Lesebefehls an das Mittel (41) bei Detektion des ersten Ereignisses (A), Geben des zweiten Lesebefehls an das Mittel (48) bei Detektion des zweiten Ereignisses (B) und Erzeugen der Speicheradresse des Speichers (49) als eine Funktion einer Differenz zwischen den ersten und zweiten momentanen Werten gestaltet ist.

## Revendications

1. Procédé de mesure et d'enregistrement de variations statistiques temporelles dans un signal de mesure, qui est obtenu lors de la lecture ou reproduction d'un support optique de données (34), **caractérisé par** les étapes consistant :
a) à détecter un premier événement (A) dans le signal de mesure et, en réponse, à engendrer un signal croissant,
b) à détecter un second événement (B) dans le signal de mesure ou dans un signal de référence ou d'horloge associé au signal de mesure, et, en réponse, à lire une valeur instantanée du signal croissant,
c) à engendrer une adresse de mémoire en fonction de la valeur instantanée lue,
d) à lire un contenu numérique mémorisé dans une mémoire électronique (49) à l'adresse de mémoire obtenue dans l'étape c),
e) à modifier arithmétiquement la valeur numérique lue dans la mémoire et,
f) à écrire la valeur arithmétiquement modifiée dans la mémoire électronique à l'adresse de mémoire obtenue dans l'étape c).

2. Procédé selon la revendication 1, **caractérisé en ce qu'**il est appliqué à la production de statistiques de scintillements lors de la lecture ou reproduction d'un support optique de données (34).

3. Procédé selon la revendication 1 ou 2, **caractérisé en ce que** le support optique de données (34) est un CD.

4. Procédé selon la revendication 1 ou 2, **caractérisé en ce que** le support optique de données (34) est un DVD.

5. Procédé selon l'une quelconque des revendications 2 à 4, **caractérisé en ce que** le premier événement (A) correspond au début d'un élément de stockage (100) dans la couche porteuse d'information du support de données (34), et **en ce que** le second événement (B) correspond à la fin du même élément de stockage (100).

6. Procédé selon l'une quelconque des revendications 2 à 4, **caractérisé en ce que** lesdits événements correspondent respectivement au début (A) d'un élément de stockage (102) dans la couche porteuse d'information du support de données (34) et à un front prédéterminé (B) d'un signal de référence ou d'horloge associé au signal de mesure.

7. Procédé selon l'une quelconque des revendications précédentes, **caractérisé par** les étapes consistant :
i) lorsque le premier événement (A) a été détecté, à lire une première valeur instantanée d'un premier ou d'un second signal triangulaire (I, II), les premier et second signaux ayant une différence de phase prédéterminée l'un par rapport à l'autre,
ii) lorsque le second événement (B) a été détecté, à lire une seconde valeur instantanée du même signal triangulaire que dans l'étape i), et
iii) à engendrer l'adresse de mémoire pour la mémoire électronique (49) en fonction des valeurs instantanées lues dans les étapes i) et ii),
dans lequel les lectures prévues aux étapes i) et ii) sont effectuées pour l'un ou l'autre des signaux triangulaires (I, II), qui présente une linéarité entre les premier et second événements.

8. Dispositif (40) pour la mesure et l'enregistrement de variations statistiques temporelles dans un signal de mesure obtenu lors de la lecture ou reproduction d'un support optique de données (34), **caractérisé par** :
un dispositif de contrôle et de commande (41) capable de recevoir le signal de mesure ;
un moyen de stockage (49) comprenant plusieurs cellules de mémoire adressables ;
un moyen (47) pour engendrer un signal croissant lorsqu'il reçoit une commande de démarrage en provenance du dispositif de contrôle et de commande (41) ; et
un moyen (48) pour lire et numériser une valeur instantanée du signal croissant, lorsqu'il reçoit une commande de lecture en provenance du dispositif de contrôle et de commande (41);
dans lequel le dispositif de contrôle et de commande (41) est agencé pour :
a) détecter un événement de départ (A) dans le signal de mesure et, en réponse à cet événement, envoyer une commande de démarrage audit moyen (47) pour engendrer un signal croissant ;
b) détecter un événement terminal (B) dans le signal de mesure ou dans un signal de référence ou d'horloge associé au signal de mesure, envoyer, en réponse à cet événement terminal, une commande de lecture audit moyen (48) de lecture et de numérisation, et recevoir dudit moyen de lecture et de numérisation une valeur numérique du signal de mesure au moment où l'événement terminal se produit ;
c) engendrer une adresse de mémoire en fonction de la valeur reçue du signal de mesure et lire le contenu numérique à cette adresse de mémoire dans le moyen de stockage (49) ; et
d) exécuter une opération arithmétique avec le contenu de la mémoire, lu dans c) et utilisé comme un opérande, et écrire le résultat de l'opération arithmétique à l'adresse de mémoire engendrée dans c).

9. Dispositif selon la revendication 8, **caractérisé en ce que** l'événement de départ (A) correspond à un bord prédéterminé (A) d'un élément de stockage dans la couche de stockage du support optique de données (34).

10. Dispositif selon la revendication 8 ou 9, **caractérisé en ce que** l'événement terminal (B) correspond à un bord prédéterminé (B) d'un élément de stockage (100) dans la couche de stockage du support optique de données (34).

11. Dispositif selon l'une quelconque des revendications 8 à 10, **caractérisé en ce que** soit l'événement de départ (A), soit l'événement terminal (B) correspond à un front prédéterminé d'un signal de référence ou d'horloge associé au signal de mesure.

12. Dispositif selon l'une quelconque des revendications 8 à 11, **caractérisé en ce que** l'opération arithmétique dans d) consiste à incrémenter le contenu lu dans la mémoire.

13. Dispositif selon l'une quelconque des revendications 8 à 12, **caractérisé en ce que** :
le moyen (47) est agencé pour engendrer un premier et un second signal triangulaire (I, II) avec une certaine différence mutuelle de phase,
le moyen (48) est agencé pour lire une première et une seconde valeur instantanée de l'un ou l'autre des signaux triangulaires (I, II) qui présente une linéarité entre l'événement de départ et l'événement terminal, lors de la réception d'une première et d'une seconde commande de lecture en provenance du dispositif de contrôle et de commande (41), et
le dispositif de contrôle et de commande (41) est agencé pour envoyer la première commande de lecture au moyen (48) lors de la détection du premier événement (A), envoyer la seconde commande de lecture au moyen (48) lors de la détection du second événement (B), et engendrer l'adresse de mémoire pour la mémoire (49) en fonction d'une différence entre les première et seconde valeurs instantanées.
